Europäisches Patentamt

European Patent Office

Office européen des brevets

(19)

(11) Veröffentlichungsnummer: **0 208 086**

**A1**

(12) **EUROPÄISCHE PATENTANMELDUNG**

(21) Anmeldenummer: 86106434.3

(22) Anmeldetag: 12.05.86

(51) Int. Cl.4: **C03B 37/018** , G02B 6/10

(30) Priorität: 15.05.85 DE 3517643

(43) Veröffentlichungstag der Anmeldung:
14.01.87 Patentblatt 87/03

(84) Benannte Vertragsstaaten:
DE FR GB

(71) Anmelder: **Siemens Aktiengesellschaft Berlin und München**
**Wittelsbacherplatz 2**
**D-8000 München 2(DE)**

(72) Erfinder: **Schneider, Hartmut, Dr.**
**Ignaz-Günther-Strasse 42**
**D-8000 München 81(DE)**
Erfinder: **Ramstetter, Asbjörn, Dr.**
**Rübezahlstrasse 14**
**D-8000 München 83(DE)**

(54) **Verfahren zur Herstellung von mit Fluor dotierten Vorformen aus Quarzglas zum Ziehen von Glasfasern für die optische Nachrichtenübertragung.**

(57) Verfahren zur Herstellung von mit Fluor dotierten Vorformen aus Quarzglas zum Ziehen von Glasfasern für die optische Nachrichtenübertragung, wobei durch Abscheidung von $SiO_2$-Partikeln auf der Außenfläche eines zylindrischen Substratstabes (1) aus der Verbrennungsflamme (2) ein Pulverkörper - (3) hergestellt wird, der entsprechend einem vorbestimmten Dotierungsprofil mit Fluor dotiert wird und der zu klaren Vorform sinterbar ist. Die bekannte Flammenhydrolyse ist dafür ungeeignet. Bisher wurden zunächst undotierte Pulverkörper aus $SiO_2$ hergestellt und nachträglich während eines wasserstofffreien Trocknungs-und Sinterprozesses mit fluorhaltigen Gasen durch Diffusion dotiert. Die Diffusion ist aber problematisch. Es wird daher ein Verfahren angegeben, bei dem der Prozeßschritt des Diffundierens des Fluors überflüssig wird. Dazu wird die Dotierung mit Fluor durch direkte Dotierung der $SiO_2$-Partikeln während der Bildung in der wasserstofffreien Verbrennungsflamme und vor der Abscheidung auf dem Substratkörper vorgenommen.

FIG 2

## Verfahren zur Herstellung von mit Fluor dotierten Vorformen aus Quarzglas zum Ziehen von Glasfasern für die optische Nachrichtenübertragung

Die vorliegende Erfindung betrifft ein Verfahren zur Herstellung von mit Fluor dotierten Vorformen aus Quarzglas zum Ziehen von Glasfasern für die optische Nachrichtenübertragung nach dem Oberbegriff des Patentanspruchs 1, wobei dort unter "Verbrennungsflamme" eine chemische Flamme, keine Plasmaflamme zu verstehen ist.

Lichtführende Fasern aus Quarzglas für die optische Nachrichtentechnik müssen ein geeignetes, vom Faserkern zum Fasermantel hin abfallendes Brechzahlprofit aufweisen. Man kann dies durch Dotierung mit brechzahlerhöhenden Stoffen im Faserkern, beispielsweise mit $GeO_2$, $Al_2O_3$, $P_2O_5$ usw., oder mit brechzahlerniedrigenden Glaszusätzen, beispielsweise mit $B_2O_3$ oder mit Fluor, im Fasermantel erreichen, wobei im Falle des Fluors $F^-$ anstelle von $1/2 \ O^{2-}$ an Si gebunden ist. Für Anwendungen bei l,5 µm optischer Wellenlänge im Dämpfungsminimum des reinen Quarzglases scheiden $B_2O_3$ und auch $P_2O_5$ weitgehend aus, weil diese Dotierstoffe die Absorptionsdämpfung erhöhen (siehe dazu H.Osanai, T.Shioda, T.Morigama, S.Araki, M.Horiguchi, H.Takata: Effect of dopants on transmission loss low-OH-content optical fibers, Electr. Lett. 12 - (1976) S. 549-550). Die Dotierstoffe $GeO_2$, $Al_2O_3$ und $P_2O_5$ erhöhen zudem die Rayleigh-Streudämpfung der Faser (siehe R.Olshansky: Propagation in glass optical waveguides, Review of Mod. Phys. 51 (1979) S. 341-367). Ein weiterer - schwerwiegender Nachteil der oxidischen Dotierstoffe ist ihre Neigung, mit molekularem Wasserstoff, der in die Faser aus der Umgebung eindiffundieren kann, zu reagieren, und dabei OH-Gruppen zu bilden, die zu einer permanenten Verminderung der Lichttransmission im Bereich um l,4 µm Wellenlänge führen. Nur mit Fluorid dotiertes Quarzglas erreicht die niedrige Dämpfung des reinen Quarzglases und ist zudem weniger reaktiv mit $H_2$ als $SiO_2$ (siehe M.Miyamoto, K.Sanada, T.Kobayashi, D.Fukuda: Effects of residual halogen in optical fibers on hydrogen loss increase characteristics, Conf. Opt. Fiber Comm., San Diego, 11.- 13. Febr. 1985, Techn. Digest, S. 46-47, Opt, Soc. of America 1985). Fluorid wird neben oxidischen Dotierstoffen dann benötigt, wenn Fasern mit Mehrfachmantel hergestellt werden sollen, bei denen mindestens ein Mantel eine Brechzahl aufweisen soll, die kleiner als die des Quarzglases ist (siehe L.G.Cohen, W.L. Mammel, S.J.Jang: Low-loss quadruple-clad single-mode lightguides with dispersion below 2 ps/km.nm over the 1.28-1.65 µm wavelength range, Electr. Lett. 18 (1982) S. 1023-1024).

Leider ist der besonders effiziente und kostengünstige Außenabscheideprozeß, bei dem $SiO_2$ durch Flammenhydrolyse erzeugt wird und auf der Außenfläche eines zylindrischen Substratkörpers abgeschieden wird, nicht für die Herstellung von mit Fluorid dotiertem Glas geeignet (siehe H.Kanamori, N.Yoshioka, M.Kyoto, M.Watanabe, G.Tanaka: Fluorine doping in the VAD method and its applications to optical fiber fabrication, Proc. 9th Europ. Conf. Opt. Comm., Geneva, 23.-26. Okt. 1983, S. 13-16, North-Holland, Amsterdam 1983). Grund dafür ist die ungünstige Lage des chemischen Gleichgewichts, das gegeben ist durch

$$2 \ H_2O + SiF_4 = 4 \ HF + SiO_2,$$

und das bei höheren Temperaturen auf der Seite des Fluorwasserstoffs liegt. In der heißen Flamme wird daher beigemischtes Fluorid, das zunächst in Form eines Freons, wie beispielsweise $CF_4$, $C_2F_6$, usw. oder von $CF_3Cl$ usw. oder von $SiF_4$ vorliegen kann, letztlich in Fluorwasserstoff (HF) überführt, der nur eine geringe Löslichkeit in $SiO_2$ aufweist und zum größten Teil gasförmig entweicht.

Mit Fluorid dotiertes Quarzglas kann durch Abscheidung auf der Innenwand eines rohrförmigen Substratkörpers aus wasserstofffreier Atmosphäre, beispielsweise mittels des bekannten MCVD-Verfahrens hergestellt werden. Für dieses Verfahren sind jedoch eher niedrige Abscheideraten typisch.

Bei der Abscheidung auf der Außenfläche eines Substratkörpers ist bisher das Problem der Dotierung mit Fluor in der Weise gelöst worden, daß zunächst undotierte Pulverkörper aus $SiO_2$ hergestellt werden, die dann nachträglich während des wasserstofffreien Trocknungs-und Sinterprozesses mit fluorhaltigen Gasen durch Diffusion dotiert werden. Für die Herstellung des Dotierungsprofils versucht man den Umstand auszunutzen, daß die Diffusionsrate des Fluor in den porösen Körper der Dichte des Materials umgekehrt korreliert ist. Der Körper aus $SiO_2$ muß dafür im Kern eine höhere und im Mantel eine niedrigere Dichte aufweisen - (siehe dazu T. Miya, M.Nakahara, F. Hanawa, Y.Ohmori: Newly developed fluorine doping technique for VAD process, Proc. 10th Europ. Conf. Opt. Comm., Stuttgart 3.-6. Sept. 1984, S. 294-295, VDE-Verlag, Berlin 1984). Durch Verwendung eines massiven Stabes aus $SiO_2$ als Substratkörper - (siehe G.E.Berkey: Fluorine-doped fibers by the outside vapor deposition process, Techn. Digest, Conf. Opt. Fiber Comm., New Orleans, 23.-25. Jan. 1984, S. 22-23, Opt. Soc. of America 1984) oder durch Abscheidung von unterschiedlich dichtem

Pulver aus $SiO_2$-Partikeln läßt sich dies erreichen. Das gleichzeitig bei der Diffusionstemperatur einsetzende Sintern des Glases ist jedoch von Nachteil, da man gezwungen wird, für dicke Körper sehr lange Diffusionszeiten bei niedrigen Temperaturen in Kauf zu nehmen.

Aufgabe der vorliegenden Erfindung ist es, ein Verfahren der eingangs genannten Art anzugeben, bei dem der Prozeßschritt des Diffundierens des Fluors überflüssig wird.

Diese Aufgabe wird gemäß dem kennzeichnenden Teil des Patentanspruchs 1 dadurch gelöst, daß die Dotierung mit Fluor durch direkte Dotierung der $SiO_2$-Partikeln während deren Bildung in der wasserstofffreien Flamme und vor der Abscheidung auf dem Substratkörper vorgenommen wird.

Bevorzugterweise wird dabei gemäß Anspruch 2 die Abscheidung aus einer Flamme vorgenommen, in der CO, $C_2N_2$, $CS_2$ oder/und COS als Brenngas mit $O_2$ oder/und zumindest einem Stickoxid, beispielsweise NO, $N_2O$ als gasförmiges Oxidationsmittel verbrannt wird.

Es sei darauf hingewiesen, daß die Abscheidung von trockenem Pulver aus $SiO_2$-Partikel aus einer Flamme gemäß Anspruch 2 für sich bereits aus der DE-OS 30 27 592 bekannt ist. Dort wird aber auf der Innenfläche eines rohrförmigen Substratkörpers und nicht auf der Außenfläche eines zylindrischen Substratkörpers abgeschieden.

Zweckmäßigerweise werden gemäß Anspruch 3 zur Bildung der mit Fluor dotierten $SiO_2$-Partikeln in der heißen Flamme miteinander reagierende Reaktionsgase verwendet, die Si-und F-haltig sind. Dabei werden vorzugsweise gemäß Anspruch 2 $SiCl_4$, $SiBr_4$ oder/und $SiJ_4$ und $SiF_4$, $SF_6$, $CF_4$, $C_2F_6$ oder/und $NF_3$ und ein gasförmiges Oxidationsmittel, vorzugsweise $O_2$ als Reaktionsgase verwendet.

Besonders vorteilhaft kann es auch sein, wenn gemäß Anspruch 5 zur Bildung der mit Fluor dotierten $SiO_2$-Partikeln gemischte Chlorfluorsilane, beispielsweise $SiCl_3F$, $SiCl_2F_2$ oder $SiClF_3$, oder/und gemischte Bromfluorsilane und ein gasförmiges Oxidationsmittel als Reaktionsgase verwendet werden, da in diesem Fall das Fluorid bereits am reaktionsfähigen Siliziumchlorid fest gebunden ist und besonders effizient eingebaut werden kann.

Die Reaktionsgase werden zweckmäßigerweise gemäß Anspruch 6 vorgemischt der Flamme zugeführt.

Bevorzugterweise werden die Reaktionsgase zur Bildung der mit Fluor dotierten $SiO_2$-Partikeln und das die Flamme speisende, aus wenigstens einem Brenngas und wenigstens einem gasförmigen Oxidationsmittel bestehende Heizgas nicht gemischt, sondern vielmehr gemäß Anspruch 7 voneinander getrennt der Flamme zugeführt.

Zweckmäßig ist es, wenn gemäß Anspruch 8 der Strom des Heizgases den in gleicher Richtung zur Flamme fließenden Strom der Reaktionsgase umhüllt.

Der Heizgasstrom kann entweder vorgemischt oder nach Brenngas und gasförmigem Oxidationsmittel getrennt der Flamme zugeführt werden. Bevorzugterweise werden aber gemäß Anspruch 9 das Brenngas und das gasförmige Oxidationsmittel des Heizgases voneinander getrennt der Flamme zugeführt, derart, daß das den Strom der Reaktionsgase umhüllende gasförmige Oxidationsmittel von dem Brenngas umhüllt wird.

Wie schon erwähnt, kommen als Brenngase unter anderem CO und $CS_2$ in Frage. CO bietet wegen des höheren Dampfdruckes gegenüber $CS_2$ den Vorteil der leichteren Dosierbarkeit. $CS_2$ wäre wegen der besseren Brennbarkeit zu bevorzugen.

Bei dem erfindungsgemäßen Verfahren bilden sich nach Maßgabe der Aufheizung im Strom der Reaktionsgase $SiO_2$-Partikeln, die, geführt durch den insbesondere umhüllenden äußeren Heizgasstrom konzentriert auf dem strömungsabwärts angeordneten relativ kalten Substratkörper abgeschieden werden. Triebkraft ist die Thermophorese im Temperaturgradienten, die zur Partikelwanderung von der heißen zur kalten Region führt.

Zur besseren Ausbildung der Flamme, insbesondere einer Flamme, in der CO mit $O_2$ verbrannt wird, ist es von Vorteil, wenn gemäß Anspruch 10 die Reaktionsgase in einem in das Innere der Flamme ragenden Rohr zugeführt werden. Die in der Regel flammenlöschenden Halogenide werden so in die bereits entwickelte, heiße Flamme eingeleitet.

Vorteilhaft kann es auch sein, wenn gemäß Anspruch 11 das Heizgas über einen die Flammengeschwindigkeit erhöhenden Katalysator zur Flamme geleitet wird, weil damit ein erhöhter Stoffdurchsatz ermöglicht wird. Bei Verwendung von CO als Brenngas kann dazu ein Stück, beispielsweise ein Blech aus einem Edelmetall, beispielsweise eine Platinfolie ringförmig in dem den Strom der Reaktionsgase umhüllenden Strom des Heizgases als Katalysator angeordnet werden.

Für einen optimalen Umsatz der Halogenide in den Reaktionsgasen zum Oxid muß der Strom der Reaktionsgase vollständig durchgeheizt werden. Dafür kann es zweckmäßig sein, gemäß Anspruch 12 dem Strom der Reaktionsgase zusätzlich ein Brenn-oder Heizgas beizumischen. Alternativ dazu kann es aber auch zweckmäßig sein, wenn gemäß Anspruch 13 ein von dem in die Flamme geleiteten Strom der Reaktionsgase umhüllter und in gleicher Richtung fließender Strom eines Heizgases zusätzlich eine Flamme im Inneren des Stromes der Reaktionsgase speist. Der dabei ringförmige, d.h. im Querschnitt ringförmige Strom der Reaktionsgase kann somit beidseitig von innen und von außen her beheizt werden, insbesondere dann, wenn das Verfahren nach Maßgabe des Anspruchs 10 durchgeführt wird.

Zur Abschirmung gegen die $H_2O$-haltige Raumatmosphäre und zur Vermeidung von unerwünschten $SiO_2$-Ablagerungen auf Reaktorwänden ist es zweckmäßig, wenn gemäß Anspruch 14 die ganze Flamme von einem Strom aus Sauerstoff oder Inertgas umhüllt wird.

Vorugsweise werden gemäß Anspruch 15 die Reaktionsgase und das Heizgas durch ineinander angeordnete Rohre in der vorbestimmten Weise separat der Flamme zugeführt.

Wenn das Brenngas und das gasförmige Oxidationsmittel des Heizgases voneinander getrennt der Flamme zugeführt werden, ist es zweckmäßig, gemäß Anspruch 16 das Brenngas und das gasförmige Oxidationsmittel durch zwei durch ein Rohr separierte, ein die Reaktionsgase führendes Rohr umgebende ringförmige Zwischenräume zwischen ineinander angeordneten Rohren der Flamme zuzuleiten.

Dabei können nach Anspruch 17 die Reaktionsgase gemischt durch ein zentrales Rohr der Flamme zugeleitet werden. Wenn im Strom der Reaktionsgase zusätzlich eine Flamme erzeugt werden soll, werden bevorzugterweise gemäß Anspruch 18 diese Gase durch zumindest einen ringförmigen Zwischenraum zwischen ineinander angeordneten Rohren zugeführt, und innerhalb dieses ringförmigen Zwischenraums wird ein Heizgas zur Erzeugung der zusätzlichen Flamme im Inneren des Stromes der Reaktionsgase zugeführt.

Zur beseren Ausbildung der Flamme ist es von Vorteil, wenn nach Anspruch 19 ein Reaktionsgas führendes Rohr aus einem ein Heizgas oder ein Heizgasanteil führenden Rohr herausragt.

Bei Verwendung eines Katalysators zur Erhöhung der Flammengeschwindigkeit wird zweckmäßigerweise nach Anspruch 20 so vorgegangen, daß auf ein ein Brenngas von einem gasförmigen Oxidationsmittel des Heizgases trennendes Rohr ein Katalysator in Form eines ringförmigen Gebildes aus einem die Flammengeschwindigkeit erhöhenden Katalysatormaterials aufgesetzt wird.

Bei den erfindungsgemäßen Verfahren kann die Flamme sowohl axial als auch radial oder aber auch schräg gegen den um seine Achse rotierenden zylindrischen Substratkörper gerichtet werden. Bei axialer Abscheidung erreicht man wie beim axialen Flammenhydrolyse-Prozeß (VAD-Verfahren) ein birnenförmiges Wachstum, weil sich Material sowohl auf die Stirnfläche wie auch auf den unteren Teil der Mantelfläche des zylindrischen Substratkörpers bzw. Substratstab absetzt. Zieht man den Substratstab nach Maßgabe der Wachstumsrate ab, so gelangt man zur zylindrischen Form des abgeschiedenen Prüferkörpers. Dabei lassen sich die Abscheidebedingungen so einstellen, daß die Fluoridkonzentration in erwünschter Weise von innen nach außen über den Radius ansteigt. Dies kann beispielsweise durch eine hohe axiale Abscheidetemperatur erreicht werden. Vorteilhafte Ausführungen dazu gehen aus den Ansprüchen 22 bis 25 hervor.

Bei radialer Abscheidung auf die Mantelfläche des rotierenden Substratstabes wird ein Doppelwulst erhalten, der je nach Eintauchtiefe des Stabes in die kegelförmige Reaktionszone bzw. Flamme mehr oder weniger stark ausgeprägt ist. Zur benötigten zylindrischen Vorform gelangt man durch wiederholte Verschiebung der Flamme relativ zum Substratstab in axialer Richtung, wie dies vom lateralen Flammenhydrolyse-Prozeß (OVD-Verfahren) her bekannt ist. Das erwünschte radiale Dotierungsprofil erhält man durch Steuerung der Stoffzufuhr in den Reaktionsgasen (Anspruch 21).

Die Sinterung zum klaren Glas kann nachträglich erfolgen, wie dies beim OVD-oder VAD-Prozeß wegen der Notwendigkeit der Wasserentfernung in Chlorgas-Atmosphäre erforderlich ist. Sie kann aber vorteilhafterweise auch intermittierend unter Benutzung desselben, die Flamme erzeugenden Brenners als Abscheide-und als Sinterbrenner, oder aber simultan mit einem zweiten heißeren, wasserstofffreien Brenner, durchgeführt werden, der in Achsrichtung des Substratstabes zum erstgenannten Brenner versetzt angeordnet wird. Der Substratstab muß vor dem Sinterprozeß nicht entfernt werden; sofern ein reiner Quarzglasstab verwendet wird, kann er als Vorformkern dienen und beim anschließenden Ziehprozeß mit in die Faser integriert werden.

Die Erfindung wird anhand der Figuren in der nachfolgenden Beschreibung beispielhaft erläutert. Von den Figuren zeigen:

Figur 1 einen axialen Längsschnitt durch einen Brenner aus drei koaxialen Quarzglasrohren, von denen das zentrale Rohr zur Zufuhr der Reaktionsgase und die übrigen Rohre zur Zufuhr des Heizgases zur Flamme dienen, wobei der Brenner von einem weiteren Rohr umgeben ist, durch das Sauerstoff oder Inertgas zuleitbar ist und wobei der untere Teil der Rohre mit Durchführungen für die Gaszufuhr zu den einzelnen Rohren weggebrochen ist,

Figur 2 in perspektivischer Darstellung eine Anordnung mit einem Brenner nach Figur 1 zur axialen Abscheidung eines Pulverkörpers auf einem rotierenden Substratstab, und

Figur 3 in perspektivischer Darstellung eine Anordnung mit einem Brenner nach Figur 1 zur radialen Abscheidung eines Pulverkörpers auf einem rotierenden Substratstab.

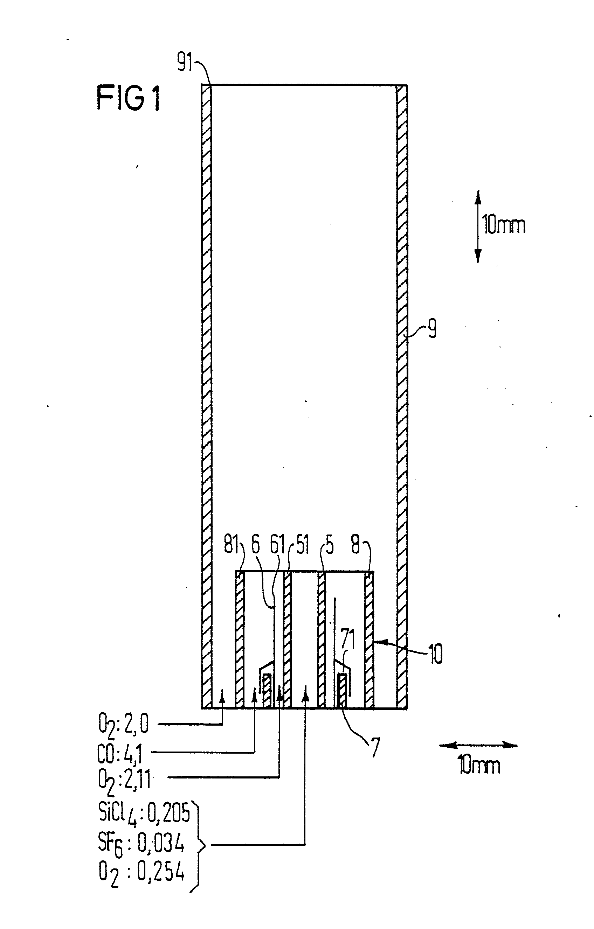

Bei dem CO-Brenner nach Figur 1 strömen die in das zentrale Quarzglasrohr 5 eingeleiteten Reaktionsgase von unten nach oben und treten am oberen Ende 51 dieses Rohres 5 aus. In das mittlere Quarzglasrohr 7, welches das zentrale Rohr 5 umgibt, wird $O_2$ als das gasförmige Oxidationsmittel des Heizgases geleitet, das in dem ringförmigen Zwischenraum zwischen dem Rohr 5 und dem Rohr 7 nach oben strömt und am oberen Ende 71 des mittleren Rohres 7 austritt. Dieses obere Ende 71 ist gegenüber dem oberen Ende 51 des zentralen Rohres 5 zurückversetzt. In das äußere Quarzglasrohr 8 des Brennenrs 10, welches das mittlere Rohr 7 umgibt, wird CO als das Brenngas des Heizgases geleitet, das in dem ringförmigen Zwischenraum zwischen dem mittleren Rohr 7 und dem äußeren Rohr 8 nach oben strömt und nach Austritt aus dem oberen Ende 71 des mittleren Rohres 7 mit dem gasförmigen Oxidationsmittel zur Bildung eines entflammbaren Gasgemisches in Kontakt kommt. Das obere Ende 81 des äußeren Rohres 8 kann auf gleicher Höhe wie das obere Ende 71 des mittleren Rohres 7 liegen, es kann aber auch auf einer anderen Höhe, beispielsweise nach Figur 1 auf Höhe des oberen Endes 51 des zentralen Rohres 5, liegen.

Der ganze Brenner 10 ist von einem koaxialen Hüllrohr 9 aus Quarzglas umgeben, das über das obere Ende 51 bzw. 81 des Brenners 10 hinausragt, und in das $O_2$ oder ein Inertgas zur Bildung eines die Flamme über dem Brenner 10 umhüllenden Gasstroms einleitbar ist, das in dem ringförmigen Zwischenraum zwischen dem äußeren Rohr 8 des Brennrs 10 und dem Hüllrohr 9 nach oben strömt.

Über das obere Ende 71 des mittleren Rohres 7 des Brenners 10 ist ein Ring 6 aus Platinblech gestülpt, der in dem $O_2$-Strom des Heizgasstromes angeordnet ist und im wesentlichen aufgrund der katalytischen Wirkung des Platins eine Erhöhung der Flammengeschwindigkeit und damit einen erhöhten Stoffdurchsatz herbeiführen kann.

Für die Abscheidung eines Pulverkörpers auf einem Quarzglasstab 1 von 6 mm Außendurchmesser wurde ein Brenner nach Figur 1 mit folgenden Abmessungen verwendet: Das zentrale Rohr 5 hatte einen Innendurchmesser von 4 mm und einen Außendurchmesser von 6 mm. Der Innendurchmesser des mittleren Rohres 7 betrug 10 mm, sein Außendurchmesser 12 mm. Das äußere Rohr 8 hatte einen Innendurchmesser von 17,5 mm und einen Außendurchmesser von 20 mm. Das Hüllrohr 9 mit einem Innendurchmesser von 27 mm und einem Außendurchmesser von 30 mm ragte 70 mm über das obere Ende 51 bzw. 81 des zentralen Rohres 5 und des äußeren Rohres 8 des Brenners.

Das obere Ende 71 des mittleren Rohres 7 des Brenners 10 war gegenüber dem oberen Ende 51 des zentralen Rohres 5 um 15 mm zurückversetzt.

Der in den Sauerstoffstrom des Heizgases hineinragende Ring 6 aus Platinblech war so bemessen, daß sein oberes Ende 61 etwa 4 mm unterhalb des oberen Endes 51 des zentralen Rohres 5 angeordnet war.

Für die Abscheidung wurde in das zentrale Rohr 5 ein Reaktionsgasestrom von 0,205 NL/min $SiCl_4$, 0,034 NL/min $SF_6$ und 0,254 NL/min Sauerstoff als Trägergas eingeleitet. In das mittlere Rohr 7 wurden 2,11 NL/min Sauerstoff und in das äußere Rohr 8 4,1 NL/min CO geleitet. In das Hüllrohr 9 wurden 2 NL/min Sauerstoff geleitet.

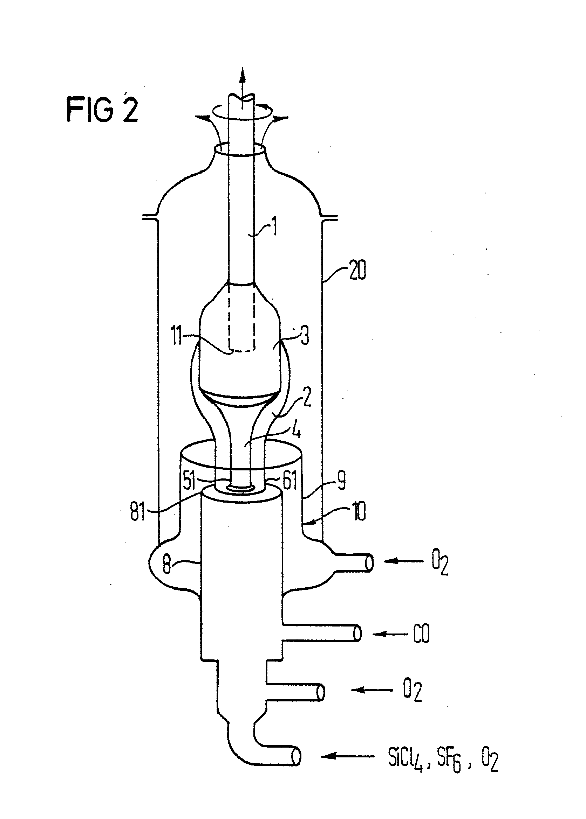

Die Abscheidung wurde zunächst mit einer Anordnung nach Figur 2 durchgeführt, bei der axial abgeschieden wird. Dazu wurde der Quarzglasstab 1 vertikal und koaxial zum Brenner 10 so angeordnet und gehalten, daß seine untere Stirnfläche 11 auf Höhe des oberen Endes 91 des Hüllrohres lag. Auf diesen Quarzglasstab 1, der in ein Reaktorgefäß 20 ragt, in dem sich auch das obere Ende des Brenners 10 befindet und aus dem die Verbrennungsgase oben abgesaugt werden, wurden die mit Fluor dotierten $SiO_2$-Partikeln abgeschieden, die in den von der Flamme 2 über den Brenner 10 umgebenen Strom 4 aus den Reaktionsgasen erzeugt werden. Es entstand dabei der Pulverkörper 3 am unteren Ende des bei der Abscheidung um seine mit der Achse A des Brenners 10 zusammenfallende Längsachse rotierenden Quarzglasstabes 1.

Es wurde dabei gefunden, daß man eine maximale Abscheidung von 19 mg/cm . min erhält, wenn das untere Ende des Quarzglasstabes 1 bzw. des porösen Körpers 7 -8 cm oberhalb des oberen Endes 51 des zentralen Rohres 5 des Brenners liegt. Der Fluoridgehalt im abgeschiedenen $SiO_2$ ist in Brennernähe niedrig und wächst mit zunehmendem Abstand vom Brenner 10 auf Werte von 3,7 Gew.-% an. Dieser Wert entspricht einer Brechzahländerung von $\Delta n = 0,015$ gegenüber reinem Quarzglas.

Bei der axialen Abscheidung kann das radiale Dotierungsprofil im entstehenden zylindrischen Pulverkörper durch Variation des Temperaturgradienten in der Flamme und dem Strom aus den Reaktionsgasen eingestellt werden. Das meistens erwünschte, radial von innen nach außen ansteigende Dotierungsprofil kann beispielsweise durch eine radial von innen nach außen abfallende Temperaturverteilung erhalten werden. Von Vorteil ist es dabei, einen ringförmigen Strom aus Reaktionsgasen zu verwenden, der von innen beheizt wird. Zusätzlich oder auch alternativ dazu kann das radiale Dotierungsprofil auch durch Verwendung von zwei oder mehreren konzentrischen ringförmigen Strömen aus Reaktionsgasen eingestellt werden, in denen die Stoffzufuhren variieren oder unabhängig voneinander einstellbar sind.

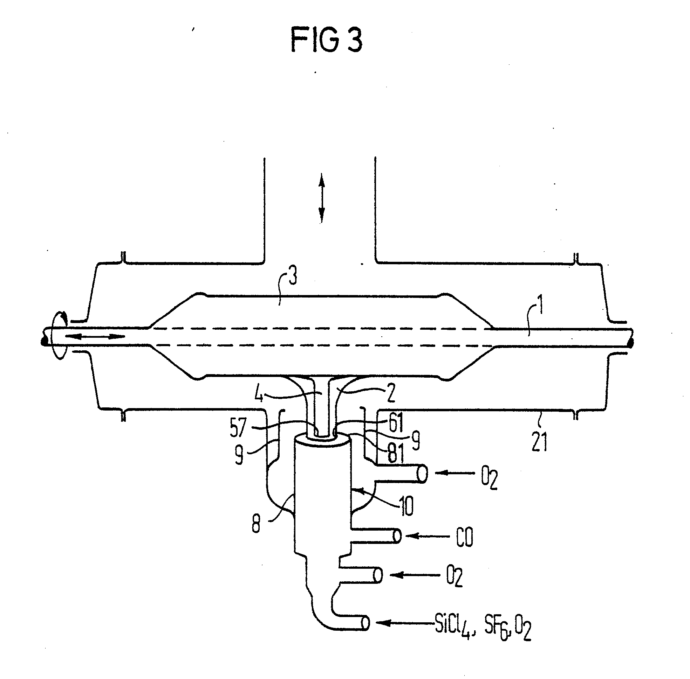

Die Anordnung nach Figur 3 unterscheidet sich von der Anordnung nach Figur 2 dadurch, daß nicht auf einer Stirnfläche, sondern auf der Mantelfläche des Substratstabes 1 abgeschieden wird. Dementsprechend ist der Substratstab waagerecht in einem ebenfalls waagerecht liegenden Reaktorgefäß 21 angeordnet. Zur Erzeugung des Pulverkörpers 3 auf dem rotierenden Substratstab 1 ist dieser laufend in seiner axialen Richtung relativ zum Brenner 10 hin-und herzubewegen. Die Absaugung der Verbrennungsgase erfolgt auch hier zweckmäßigerweise oberhalb des Pulverkörpers 3.

Bei der Abscheidung auf der Mantelfläche kann das radiale Dotierungsprofil einfach durch Steuerung der Stoffzufuhr im Strom der Reaktionsgase eingestellt werden.

Bezugszeichenliste

5 zentrales Quarzglasrohr
51 oberes Ende des zentralen Rohres 5
7 mittleres Quarzglasrohr
71 oberes Ende des mittleren Rohres 7
8 äußeres Quarzglasrohr
10 Brenner
81 oberes Ende des äußeren Rohres 8
9 Hüllrohr
6 Ring
1 Quarzglasstab
61 oberes Ende des Ringes 6
11 untere Stirnfläche des Stabes 1
91 oberes Ende des Hüllrohres 9
20 Reaktorgefäß
2 Flamme
4 Strom aus Reaktionsgasen
3 Pulverkörper
A Achse des Brenners 10
21 waagerecht liegendes Reaktorgefäß

## Ansprüche

1. Verfahren zur Herstellung von mit Fluor dotierten Vorformen aus Quarzglas zum Ziehen von Glasfasern für die optische Nachrichtenübertragung, wobei durch Abscheidung von S iO$_2$-Partikeln auf der Außenfläche eines Substratkörpers (1) aus der Verbrennungsflamme (2) ein Pulverkörper (3) hergestellt wird, der entsprechend einem vorbestimmten Dotierungsprofil mit Fluor dotiert wird und der zur klaren Vorform sinterbar ist, **dadurch gekennzeichnet** , daß die Dotierung mit Fluor durch direkte Dotierung der SiO$_2$-Partikeln während deren Bildung in der Wasserstofffreien Flamme (2) und vor der Abscheidung auf dem Substratkörper (1) vorgenommen wird.

2. Verfahren nach Anspruch 1, **dadurch gekennzeichnet** , daß die Abscheidung aus einer Flamme (2) vorgenommen wird, in der CO, C$_2$N$_2$, CS$_2$ oder/und COS als Brenngas mit O$_2$ oder/und zumindest einem Stickoxid als gasförmiges Oxidationsmittel verbrannt wird.

3. Verfahren nach Anspruch 1 oder 2, **dadurch gekennzeichnet** , daß zur Bildung der mit Fluor dotierten SiO$_2$-Partikeln in der heißen Flamme (2) miteinander reagierende Reaktionsgase verwendet werden, die Si-und F-haltig sind.

4. Verfahren nach Anspruch 3, **dadurch gekennzeichnet** , daß zur Bildung der mit Fluor dotierten SiO$_2$-Partikeln SiCl$_4$, SiBr$_4$ oder/und SiJ$_4$ und SiF$_4$, SF$_6$, CF$_4$, C$_2$F$_6$, C$_3$F$_8$, CF$_2$Cl$_2$ oder/und NF$_3$ und ein gasförmiges Oxidationsmittel als Reaktionsgase verwendet werden.

5. Verfahren nach Anspruch 3 oder 4, **dadurch gekennzeichnet** , daß zur Bildung der mit Fluor dotierten SiO$_2$-Partikeln gemischte Chlorfluorsilane oder/und gemischte Bromfluorsilane und ein gasförmiges Oxidationsmittel als Reaktionsgase verwendet werden.

6. Verfahren nach einem der Ansprüche 3 bis 5, **dadurch gekennzeichnet** , daß die Reaktionsgase vorgemischt der Flamme (2) zugeführt werden.

7. Verfahren nach einem der vorhergehenden Ansprüche, **dadurch gekennzeichnet** , daß die Reaktionsgase zur Bildung der mit Fluor dotierten SiO$_2$-Partikeln und das die Flamme (2) speisende, aus wenigstens einem Brenngas und wenigstens einem gasförmigen Oxidationsmittel bestehende Heizgas voneinander getrennt der Flamme (2) zugeführt werden.

8. Verfahren nach einem der vorhergehenden Ansprüche, **dadurch gekennzeichnet** , daß der Strom des Heizgases den in gleicher Richtung zur Flamme (2) fließenden Strom der Reaktionsgase umhüllt.

9. Verfahren nach Anspruch 8, **dadurch gekennzeichnet** , daß das Brenngas und das gasförmige Oxidationsmittel des Heizgases voneinander getrennt der Flamme (2) zugeführt werden, derart, daß das den Strom (4) der Reaktionsgase umhüllende gasförmige Oxidationsmittel von dem Brenngas umhüllt wird.

10. Verfahren nach einem der vorhergehenden Ansprüche, insbesondere nach Anspruch 8 oder 9, **dadurch gekennzeichnet** , daß die Reaktionsgase in einem in das Innere der Flamme (2) ragenden Rohr (5) zugeführt werden.

11. Verfahren nach einem der vorhergehenden Ansprüche, **dadurch gekennzeichnet** , daß das Heizgas über einem die Flammengeschwindigkeit erhöhenden Katalysator (6) zur Flamme (2) geleitet wird.

12. Verfahren nach einem der Ansprüche 3 bis 11, **dadurch gekennzeichnet** , daß dem Strom - (4) der Reaktionsgase zusätzlich ein Brenn-oder Heizgas beigemischt wird.

13. Verfahren nach einem der Ansprüche 3 bis 12, insbesondere nach Anspruch 10, **dadurch gekennzeichnet** , daß ein von dem in die Flamme - (2) geleiteten Strom (4) der Reaktionsgase umhüllter und in gleicher Richtung fließender Strom eines Heizgases zusätzlich eine Flamme im Inneren des Stromes der Reaktionsgase speist.

14. Verfahren nach einem der vorhergehenden Ansprüche, **dadurch gekennzeichnet** , daß die Flamme (2) außerhalb des Stromes (4) der Reaktionsgase von einem Strom aus Sauerstroff oder Inertgas umhüllt wird.

15. Verfahren nach einem der vorhergehenden Ansprüche, **dadurch gekennzeichnet** , daß die Reaktionsgase und das Heizgas durch ineinander angeordnete Rohre (5, 7, 8) in der vorbestimmten Weise separat der Flamme (2) zugeführt werden.

16. Verfahren nach Anspruch 15, **dadurch gekennzeichnet** , daß das Brenngas und das gasförmige Oxidationsmittel voneinander getrennt durch zwei durch ein Rohr (7) separierte, ein die Reaktionsgase führendes Rohr (5) umgebende ringförmige Zwischenräume zwischen ineinander angeordneten Rohren (5 und 7, 7 und 8) der Flamme (2) zugeleitet werden.

17. Verfahren nach Anspruch 15 oder 16, **dadurch gekennzeichnet** , daß die Reaktionsgase gemischt durch ein zentrales Rohr (5) der Flamme (2) zugeleitet werden.

18. Verfahren nach Anspruch 15 oder 16, **dadurch gekennzeichnet** , daß die Reaktionsgase durch zumindest einen ringförmigen Zwischenraum zwischen ineinander angeordneten Rohren zugeführt werden, und daß innerhalb dieses ringförmigen Zwischenraumes ein Heizgas zur Erzeugung einer zusätzlichen Flamme im Inneren des Stromes der Reaktionsgase zugeführt wird.

19. Verfahren nach Anspruch 16, 17 oder nach Anspruch 11, **dadurch gekennzeichnet** , daß ein ein Reaktionsgas führendes Rohr (5) aus einem ein Heizgas oder einen Heizgasanteil führenden Rohr - (7) herausragt.

20. Verfahren nach einem der Ansprüche 16 bis 19 und nach Anspruch 11, **dadurch gekennzeichnet** , daß auf ein ein Brenngas von einem gasförmigen Oxidationsmittel des Heizgases trennendes Rohr (7) ein Katalysator in Form eines ringförmigen Gebildes aus einem die Flammengeschwindigkeit erhöhenden Katalysatormaterial aufgesetzt ist. .

21. Verfahren nach einem der vorhergehenden Ansprüche, **dadurch gekennzeichnet** , daß ein vorbestimmtes radiales Dotierungsprofil in einem durch seitliches Abscheiden der mit Fluor dotierten $SiO_2$-Partikeln auf die Mantelfläche eines zylindrischen Substratstabes (1) erzeugten zylindrischen Pulverkörper (3) durch Steuerung der Stoffzufuhr in den zugeführten Reaktionsgasen während der Abscheidung eingestellt wird.

22. Verfahren nach einem der vorhergehenden Ansprüche, **dadurch gekennzeichnet** , daß ein vorbestimmtes radiales Dotierungsprofil in einem durch axiales Abscheiden der mit Fluor dotierten $SiO_2$-Partikeln auf eine Stirnfläche (11) eines zylindrischen Substratstabes (1) erzeugten zylindrischen Pulverkörper (3) durch Wahl des radialen Temperaturverlaufs in der Flamme und den Reaktionsgasen eingestellt wird.

23. Verfahren nach Anspruch 22, **dadurch gekennzeichnet** , daß ein radial von innen nach außen ansteigendes Dotierungsprofil durch eine radial von innen nach außen abfallende Temperaturverteilung eingestellt wird.

24. Verfahren nach Anspruch 23, **dadurch gekennzeichnet** , daß ein ringförmiger Strom aus Reaktionsgasen verwendet wird, der von innen beheizt wird.

25. Verfahren nach einem der Ansprüche 23 bis 24, **dadurch gekennzeichnet** , daß das radiale Dotierungsprofil durch Verwendung von zwei oder mehreren konzentrischen, ringförmigen Strömen aus Reaktionsgasen eingestellt wird, in denen die Stoffzufuhren variieren oder unabhängig voneinander einstellbar sind.

FIG 1

91

9

10mm

81 6 61 51 5 8

71

10

$O_2:2,0$

$CO:4,1$

$O_2:2,11$

$SiCl_4:0,205$
$SF_6:0,034$
$O_2:0,254$

7

10mm

FIG 2

1

20

11

3

2

4

51

61

9

81

10

8

O₂

CO

O₂

SiCl₄, SF₆, O₂

# FIG 3

## EINSCHLÄGIGE DOKUMENTE

EP 86106434.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - A1 - 3 031 147 (SIEMENS AG)<br><br>* Patentansprüche 1-7; Seite 12, Zeilen 9-18 *<br><br>-- | 1,3,4 | C 03 B 37/018<br><br>G 02 B 6/10 |
| X | DE - A1 - 3 205 345 (PHILIPS PATENTVERWALTUNG GMBH)<br><br>* Patentansprüche; Seite 2, Zeile 27 - Seite 5, Zeile 29; Fig. 1 *<br><br>-- | 1,3,4 | |
| X | PATENT ABSTRACTS OF JAPAN, unexamined applications, C Field, Vol. 8, No. 184, 23. August 1984<br><br>THE PATENT OFFICE JAPANESE GOVERNMENT<br>Seite 122 C 239<br><br>* Kokai-Nr. 59-78 943 (SUMITOMO) *<br><br>-- | 1-4 | |
| X | PATENT ABSTRACTS OF JAPAN, unexamined applications, C Field, Vol. 8, No. 260, 29 November 1984<br><br>THE PATENT OFFICE JAPANESE GOVERNMENT<br>Seite 65 C 254<br><br>* Kokai-Nr. 59-137 332 (NIPPON DENSHIN DENWA KOSHA) *<br><br>-- | 1,3,4, 21 | RECHERCHIERTE SACHGEBIETE (Int. Cl.4)<br><br>C 03 B<br>C 03 C<br>G 02 B |
| X | US - A - 4 221 825 (GUERDER)<br>* Gesamt *<br><br>-- | 1,3,4 | |

Der vorliegende Recherchenbericht wurde für alle Patentansprüche erstellt.

| Recherchenort | Abschlußdatum der Recherche | Prüfer |
|---|---|---|
| WIEN | 05-08-1986 | HAUSWIRTH |

**Europäisches Patentamt**

## EUROPÄISCHER RECHERCHENBERICHT

Nummer der Anmeldung

| | EINSCHLÄGIGE DOKUMENTE | | EP 86106434.3 |

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, unexamined applications, C Field, Vol. 5, No. 67, 7. Mai 1981<br><br>THE PATENT OFFICE JAPANESE GOVERNMENT<br>Seite 114 C 53<br><br>   * Kokai-Nr. 56-17 936<br>    (NIPPON DENSHIN DENWA<br>    KOSHA) *<br><br>     ---- | 1,8-20 | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| WIEN | 05-08-1986 | HAUSWIRTH |